# EUROPEAN PATENT APPLICATION

(11) **EP 4 400 877 A1**
(43) Date of publication of application: **17.07.2024**
(21) Application number: 23866710.9
(22) Date of filing: 28.09.2023
(51) Int. Cl.: G02B 6/02, G02B 6/036, H01S 3/067, C03B 37/018

(54) **ENERGY DELIVERY FIBER AND PREPARATION METHOD THEREFOR, AND FIBER LASER**

(30) Priority: 28.11.2022 CN 202211502513
(71) Applicant: Zhongtian Technology Advanced Materials Co., Ltd., Jiangsu 226010 (CN); Zhongtian Technology Group Co., Ltd., Nantong, Jiangsu 226463 (CN)
(72) Inventor: ZHANG, Junyi, Nantong Jiangsu 226010 (CN); SHEN, Yichun, Nantong Jiangsu 226010 (CN); JIANG, Xinli, Nantong Jiangsu 226010 (CN); QIN, Yu, Nantong Jiangsu 226463 (CN); DING, Song, Nantong Jiangsu 226010 (CN); ZHOU, Hui, Nantong Jiangsu 226010 (CN); WANG, Jianqing, Nantong Jiangsu 226010 (CN)
(74) Representative: Bandpay & Greuter
(86) International application number: PCT/CN2023/122764
(87) International publication number: WO 2024/114097

(57) **Abstract**

The present invention provides an energy transmitting fiber and preparation method thereof, and a fiber laser. The energy transmitting fiber includes a core layer and a cladding layer, where from a center of the energy transmitting fiber to an outer wall of the energy transmitting fiber, the core layer includes an inner core layer, an inner sinking layer and an outer core layer that are cladded sequentially, and the cladding layer is cladded on an outer wall of the outer core layer; along a direction perpendicular to an extension direction of the energy transmitting fiber, a cross-section of the inner core layer is in a circular shape, a cross-section of the inner sinking layer is in a ring shape, a cross-section of an inter wall of the outer core layer is in a circular ring shape, an outer wall of a cross-section of the outer core layer is in a rectangular ring shape, the inner core layer and the inner sinking layer are concentrically disposed, and the outer core layer is centrally symmetric along a center of the inner core layer; at least two of the inner core layer, the inner sinking layer and the outer core layer have different refractive indices. A light beam outputted by the energy transmitting fiber of the present invention has good energy uniformity, and when using the fiber laser including the energy transmitting fiber to cut a plate, it is not easy to cause damage to the plate.

## Description

The present application claims the priority to Chinese patent application No. 202211502513.3 and entitled "Energy Transmitting Fiber and Preparation Method Thereof, and Fiber Laser" filed on November 28, 2022, contents of which are incorporated herein by reference in its entirety.

### TECHNICAL FIELD

The present invention relates to the technical field of optical fibers, in particular to an energy transmitting fiber and preparation method thereof, and a fiber laser.

### BACKGROUND

Fiber laser refers to a laser that uses a rare earth element-doped glass fiber as gain medium. In recent years, continuous high-power fiber lasers have been widely used in the fields of metal cutting and welding. An output light of the fiber laser is outputted through an energy transmitting fiber.

In the related art, the energy transmitting fiber includes a core layer and a cladding layer disposed around the core layer, where, a cross-section of the core layer is in a circular shape, and a cross-section of the cladding layer is in a circular ring shape.

However, the energy of the light beam outputted by the energy transmitting fiber exhibits a Gaussian distribution, and the fiber laser using the energy transmitting fiber is easy to cause damage to a plate to be cut.

### SUMMARY

The present invention provides an energy transmitting fiber and preparation method thereof, and a fiber laser, where a light beam outputted by the energy transmitting fiber has good energy uniformity, and when using the fiber laser including the energy transmitting fiber to cut a plate, it is not easy to cause damage to the plate.

In a first aspect, the present invention provides an energy transmitting fiber, including a core layer and a cladding layer, where from a center of the energy transmitting fiber to an outer wall of the energy transmitting fiber, the core layer includes an inner core layer, an inner sinking layer and an outer core layer that are cladded sequentially, and the cladding layer clads an outer wall of the outer core layer;
along a direction perpendicular to an extension direction of the energy transmitting fiber, a cross-section of the inner core layer is in a circular shape, a cross-section of the inner sinking layer is in a circular ring shape, an inter wall of a cross-section of the outer core layer is in a circular ring shape, an outer wall of a cross-section of the outer core layer is in a rectangular ring shape, the inner core layer and the inner sinking layer are concentrically disposed, and the outer core layer is centrally symmetric along a center of the inner core layer; and
at least two of the inner core layer, the inner sinking layer and the outer core layer have different refractive indices.

In one possible implementation, in the energy transmitting fiber provided by the present invention, a first difference between a refractive index of the inner core layer and a refractive index of the outer core layer is not greater than 0.002, a second difference between a refractive index of the inner sinking layer and the refractive index of the outer core layer is not greater than 0 to 0.003, and the refractive index of the inner sinking layer is not greater than the refractive index of the outer core layer.

In one possible implementation, in the energy transmitting fiber provided by the present invention, along the direction perpendicular to the extension direction of the energy transmitting fiber, the outer wall of the cross-section of the outer core layer includes multiple straight edges connected sequentially head to tail, and at least two adjacent straight edges are connected by an arc segment.

In one possible implementation, in the energy transmitting fiber provided by the present invention, the cladding layer includes a first cladding layer and a second cladding layer cladded on an outer wall of the first cladding layer, the first cladding layer is cladded on the outer wall of the outer core layer, and a difference between a refractive index of the first cladding layer and the refractive index of the outer core layer is 0.003 to 0.012, and the refractive index of the first cladding layer is smaller than the refractive index of the outer core layer;
a difference between a refractive index of the second cladding layer and the refractive index of the outer core layer is greater than 0.075, and the refractive index of the second cladding layer is smaller than the refractive index of the outer core layer.

In one possible implementation, in the energy transmitting fiber provided by the present invention, the inner core layer is a silicon dioxide layer;
the outer core layer is a silicon dioxide layer; and
the inner sinking layer is a fluorine-doped silicon dioxide layer.

In one possible implementation, in the energy transmitting fiber provided by the present invention, the inner core layer is a germanium-fluorine co-doped silicon dioxide layer;
the outer core layer is a silicon dioxide layer; and
the inner sinking layer is a silicon dioxide layer.

In one possible implementation, the energy transmitting fiber provided by the present invention further includes an outer coating layer, the outer coating layer is coated on an outer wall of the second cladding layer;
the first cladding layer is a fluorine-doped silicon dioxide layer;
the second cladding layer is an acrylic resin layer; and
the outer coating layer is an acrylic resin layer.

In one possible implementation, in the energy transmitting fiber provided by the present invention, a diameter of the inner core layer is 6 µm to 50 µm;
a diameter of an outer wall of the inner sinking layer is 7 µm to 55 µm;
along the direction perpendicular to the extension direction of the energy transmitting fiber, the outer wall of the cross-section of the outer core layer is in a square ring shape, and a distance between opposite straight edges of the outer wall of the cross-section of the outer core layer is 30 µm to 600 µm;
a diameter of the outer wall of the first cladding layer is 90 µm to 1000 µm;
a diameter of the outer wall of the second cladding layer is 170 µm to 1200 µm; and
a diameter of an outer wall of the outer coating layer is 250 µm to 1400 µm.

In one possible implementation, in the energy transmitting fiber provided by the present invention, the arc segment is a circular-arc segment, a radius of the circular-arc segment is 5 µm to 15 µm, and a ratio of the distance between opposite straight edges of the outer core layer to the radius of the circular-arc segment is 5 to 15.

In a second aspect, the present invention provides a preparation method for an energy transmitting fiber, and the method is used for preparing the energy transmitting fiber provided in the first aspect, the preparation method for the energy transmitting fiber includes:
sequentially forming an inner sinking layer and an inner core layer on an inner wall of a base tube to form a first prefabricated rod, where the inner sinking layer is cladded on the outer wall of the inner core layer;
forming an outer core layer on an outer wall of the first prefabricated rod;
polishing an outer wall of a cross-section of the outer core layer along a direction perpendicular to an extension direction of the energy transmitting fiber into a rectangular ring shape to form a second prefabricated rod; and
forming a cladding layer on an outer wall of the second prefabricated rod.

In one possible implementation, in the preparation method for an energy transmitting fiber provided by the present invention, the forming the cladding layer on the outer wall of the second prefabricated rod includes:
depositing the cladding layer on the outer wall of the second prefabricated rod by a plasma outside deposition method.

In one possible implementation, in the preparation method for an energy transmitting fiber provided by the present invention, the forming the cladding layer on the outer wall of the second prefabricated rod includes:
inserting the second prefabricated rod into a fluorine-doped bushing, and melting and shrinking the second prefabricated rod and the fluorine-doped bushing; and
polishing a cross-section of the fluorine-doped bushing along the direction perpendicular to the extension direction of the energy transmitting fiber into a circular ring shape.

In a third aspect, the present invention provides a fiber laser, including a fiber laser body and the energy transmitting fiber provided in the first aspect and connected to the fiber laser body.

For the energy transmitting fiber and preparation method thereof, and the fiber laser provided by the present invention, the energy transmitting fiber is provided with a core layer and a cladding layer, where from a center of the energy transmitting fiber to an outer wall of the energy transmitting fiber, the core layer includes an inner core layer, an inner sinking layer and an outer core layer that are for cladding sequentially, and the cladding layer clads outer wall of the outer core layer, and along a direction perpendicular to an extension direction of the energy transmitting fiber, a cross-section of the inner core layer is in a circular shape, a cross-section of the inner sinking layer is in a circular ring shape, an inter wall of a cross-section of the outer core layer is in a circular ring shape, an outer wall of a cross-section of the outer core layer is in a rectangular ring shape, the inner core layer and the inner sinking layer are concentrically disposed, and the outer core layer is centrally symmetric along a center of the inner core layer, at least two of the inner core layer, the inner sinking layer and the outer core layer have different refractive indices. In this way, the circular symmetric structure of the energy transmitting fiber can be destroyed, and at the same time, the core layer has different refractive indices so that the interior of the core layer is in a chaotic state, and thus more high-order modes can be excited, and the mode coupling among the high-order modes is stronger, so that the energy at the center of the core layer can be dispersed to the periphery, thereby transforming a Gaussian beam into a flat-topped beam. Therefore, the light beam outputted by the energy transmitting fiber has good energy uniformity, and when cutting a plate, it has a small cutting-heat-affected zone, and the plate is not easy to be damaged.

### BRIEF DESCRIPTION OF DRAWINGS

To more clearly describe technical solutions in the embodiments of the present invention or in the prior art, the drawings which need to be used for describing the embodiments or the prior art are briefly described below. Obviously, the drawings in the following description are merely some embodiments of the present invention. For those skilled in the art, other drawings may be obtained in accordance with these drawings without creative efforts.
FIG. 1 is a structural schematic view of an energy transmitting fiber provided by an embodiment of the present invention.
FIG. 2 is a comparative schematic diagram of refractive indices of an inner core layer, an inner sinking layer, an outer core layer, a first cladding layer and a second cladding layer in an energy transmitting fiber provided by an embodiment of the present invention.
FIG. 3 is a structural schematic view of a core layer in an energy transmitting fiber provided by an embodiment of the present invention.
FIG. 4 is a flowchart of a preparation method of an energy transmitting fiber provided by an embodiment of the present invention.

Description of reference numeral: 100-core layer; 110-inner core layer; 120-inner sinking layer; 130-outer core layer; 200-cladding layer; 210-first cladding layer; 220-second cladding layer; 300-outer coating layer.

### DESCRIPTION OF EMBODIMENTS

In the description of the present invention, unless otherwise specified and limited, the terms "install", "communicate", and "connect" should be understood broadly, for example, they can be fixed connection, indirect connection through an intermediate medium, internal communication between two elements or interaction between two elements. For the ordinary skilled in the art, the specific meanings of the above terms in the present invention can be understood according to specific situations.

In the description of the present invention, the terms "up", "down", "front", "back", "perpendicular", "horizontal", "top", "bottom", "inner", "outer", etc. indicate the orientation or position relationship based on the orientation or position relationship shown in the drawings, and are only for the convenience of describing the present invention and simplifying the description, and not to indicate or imply that the device or element referred to must have a specific orientation, be constructed and operated in a specific orientation, and thus they cannot be understood as a limitation of the present invention.

The terms "first", "second" and "third" (if any) in the description and claims of the present invention and also the above drawings are used to distinguish similar objects, and are not used to describe a specific order or sequence. It should be understood that the data thus used can be interchanged under appropriate circumstances, so that the embodiments of the present invention described herein can be implemented in other orders than those illustrated or described herein, for example.

Furthermore, the terms "including" and "having" and any variations thereof are intended to cover non-exclusive inclusion. For example, a process, method, system, product or maintenance tool that includes a series of steps or units is not necessarily limited to those explicitly listed, but may include other steps or units that are not explicitly listed or inherent to the process, method, product or maintenance tool.

To make the objectives, technical solutions, and advantages of embodiments of the present invention clearer, the following clearly and comprehensively describes the technical solutions in the embodiments of the present invention with reference to the accompanying drawings of the embodiments of the present invention. Apparently, the described embodiments are merely some rather than all embodiments of the present invention. All other embodiments obtained by persons of ordinary skill in the art based on the embodiments of the present invention without creative effort shall fall within the protection scope of the present invention.

In the related art, an energy transmitting fiber includes a core layer and a cladding layer disposed around the core layer, where a cross-section of the core layer is in a circular shape, and a cross-section of the cladding layer is in a circular shape. However, the energy of the light beam outputted by such energy transmitting fiber exhibits a Gaussian distribution, and when cutting a material, the Gaussian beam with highly concentrated energy is prone to damage a plate to be cut, leading to an expanded cutting-heat-affected zone and thus causing splashing of metal residues to damage an output lens of the laser. For this reason, high-power lasers use different methods to proceed a beam shaping on a laser beam excited by an active fiber, so that the laser outputted through the energy transmitting fiber is transformed from the original Gaussian beam to a flat-topped light beam, thereby improving the cutting quality of the high-power lasers.

In order to solve the above-mentioned technical problem, the present invention improves the core layer of the energy transmitting fiber, and specifically, the core layer is disposed as an inner core layer, an inner sinking layer and an outer core layer that are for cladding sequentially, where along a direction perpendicular to an extension direction of the energy transmitting fiber, an inter wall of a cross-section of the outer core layer is in a circular shape, an outer wall of a cross-section of the outer core layer is in a rectangular shape, and at least two of the inner core layer, the inner sinking layer and the outer core layer have different refractive indices. In this way, the circular symmetric structure of the energy transmitting fiber can be destroyed, and at the same time, the core layer has different refractive indices, so that the interior of the core layer is in a chaotic state, and thus more high-order modes can be excited, and the mode coupling among the high-order modes is stronger, so that the energy at the center of the core layer can be dispersed to the periphery, thereby transforming the Gaussian beam into a flat-topped beam. Therefore, the light beam outputted by the energy transmitting fiber has good energy uniformity, and when cutting a plate, it has a small cutting-heat-affected zone, and the plate is not easy to be damaged.

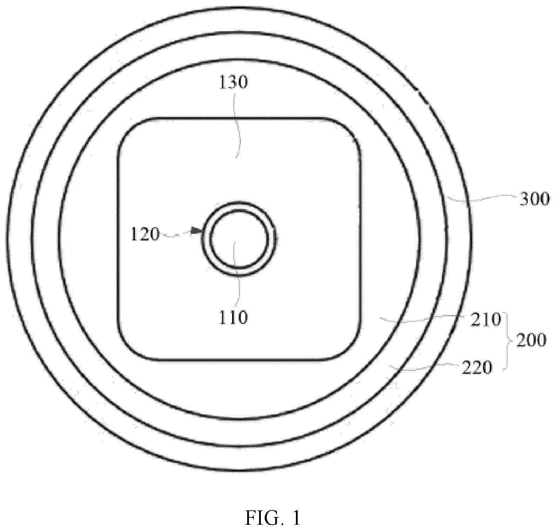

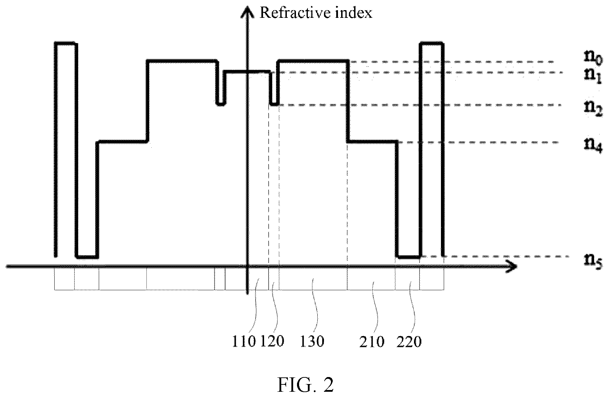

FIG. 1 is a structural schematic view of an energy transmitting fiber provided by an embodiment of the present invention, FIG. 2 is a comparative schematic diagram of refractive indices of an inner core layer, an inner sinking layer, an outer core layer, a first cladding layer and a second cladding layer in an energy transmitting fiber provided by an embodiment of the present invention.

As shown in FIG. 1 and FIG. 2, the energy transmitting fiber provided by the present invention includes a core layer 100 and a cladding layer 200, where from a center of the energy transmitting fiber 500 to an outer wall of the energy transmitting fiber 500, the core layer 100 includes an inner core layer 110, an inner sinking layer 120 and an outer core layer 130 that are sequentially for cladding, and the cladding layer 200 is cladded on an outer wall of the outer core layer 130.

Along a direction perpendicular to an extension direction of the energy transmitting fiber 500, a cross-section of the inner core layer 110 is in a circular shape, a cross-section of the inner sinking layer 120 is in a circular ring shape, an inter wall of a cross-section of the outer core layer 130 is in a circular ring shape, an outer wall of a cross-section of the outer core layer 130 is in a rectangular ring shape, the inner core layer 110 and the inner sinking layer 120 are concentrically disposed, and the outer core layer 130 is centrally symmetric along a center of the inner core layer. At least two of the inner core layer 110, the inner sinking layer 120 and the outer core layer 130 have different refractive indices.

It should be noted that, as shown in FIG. 2, *n*₀ is a refractive index of the outer core layer 130, and the value of n₀ is equal to the refractive index of silicon dioxide quartz glass, *n*₁ is a refractive index of the inner core layer 110, *n₂* is a refractive index of the inner sinking layer 120, *n*₄ is a refractive index of the first cladding layer, and *n₅* is a refractive index of the second cladding layer.

Where, when the cross-section of the outer core layer 130 is a rectangular ring shape, it can achieve good homogenization effect on the Gaussian beam and has excellent ability to homogenize light spots, compared with a circular ring shape. Moreover, different refractive indices of at least two of the inner core layer 110, the inner sinking layer 120 and the outer core layer 130 can also achieve better homogenization effect.

Where, since the inner core layer and the inner sinking layer are concentrically disposed and the outer core layer is centrally symmetric along the center of the inner core layer, compared with the conventional rectangular disposition of the core layer, the inner core layer 110 or the inner sinking layer 120 of the energy transmitting fiber provided in the present embodiment can be used as a reference for fiber fusion, so that the energy transmitting fiber and a passive fiber have higher coaxiality when fused.

It should be noted that when compared in terms of energy homogenization effect: the energy transmitting fiber in related technology is lower than the energy transmitting fiber where the refractive index of the inner core layer 110 is higher than the refractive index of the outer core layer 130 in the present embodiment, which is lower than the energy transmitting fiber where the refractive index of the inner core layer 110 is equal to the refractive index of the outer core layer 130 in the present embodiment, which is lower than the energy transmitting fiber where the refractive index of the inner core layer 110 is lower than the refractive index of the outer core layer 130 in the present embodiment. That is, when the refractive index of the inner core layer 110 is lower than the refractive index of the outer core layer 130, the energy transmitting fiber provided in the present embodiment has the best energy homogenization effect.

When compared in terms of cutting ability of energy transmitting fiber: the energy transmitting fiber where the refractive index of the inner core layer 110 is greater than the refractive index of the outer core layer 130 in the present embodiment is better than the energy transmitting fiber where the refractive index of the inner core layer 110 is equal to the refractive index of the outer core layer 130 in the present embodiment, which is better than the energy transmitting fiber where the refractive index of the inner core layer 110 is lower than the refractive index of the outer core layer 130 in the present embodiment. That is, when the refractive index of the inner core layer 110 is greater than the refractive index of the outer core layer 130, the energy transmitting fiber provided in the present embodiment has the best cutting ability.

Furthermore, compared with the conventional rectangular core layer, the energy transmitting fiber designed by the present invention has a smaller cross-sectional size of the outer core layer 130, which can improve the energy density of the final laser and enhance the quality of laser cutting.

It can be understood that when the inner sinking layer 120 and the outer core layer 130 have the same refractive index, the inner sinking layer 120 and the outer core layer 130 can be provided as one layer or two layers. That is, the core layer 100 can include only the inner core layer 110 and the outer core layer 130.

Where, since the refractive index of the core layer 100 is greater than the refractive index of the cladding layer 200, the cladding layer 200 can confine light within the core layer 100, so that the light beam is transmitted within the core layer 100.

The energy transmitting fiber provided in the present embodiment involves disposing a core layer 100 and a cladding layer 200, where from a center of the energy transmitting fiber 500 to an outer wall of the energy transmitting fiber 500, the core layer 100 includes an inner core layer 110, an inner sinking layer 120 and an outer core layer 130 that are for cladding sequentially, and the cladding layer 200 is cladded on an outer wall of the outer core layer 130, and along a direction perpendicular to an extension direction of the energy transmitting fiber 500, a cross-section of the inner core layer 110 is in a circular shape, a cross-section of the inner sinking layer 120 is in a circular ring shape, an inter wall of a cross-section of the outer core layer 130 is in a circular ring shape, an outer wall of the cross-section of the outer core layer 130 is in a rectangular ring shape, the inner core layer 110 and the inner sinking layer 120 are concentrically disposed, the outer core layer 130 is centrally symmetric along a center of the inner core layer, and at least two of the inner core layer 110, the inner sinking layer 120 and the outer core layer 130 have different refractive indices. In this way, a circular symmetric structure of the energy transmitting fiber can be destroyed, and at the same time, the core layer has different refractive indices and thus the interior of the core layer is in a chaotic state, so that more high-order modes can be excited and there is a stronger mode coupling between the high-order modes, and thus the energy at the center of the core layer can be dispersed to the periphery, thereby transforming the Gaussian beam into a flat-topped beam. Therefore, the light beam outputted by the energy transmitting fiber has good energy uniformity, and when cutting a plate, it has a small cutting-heat-affected zone, and the plate is not easy to be damaged.

In one possible implementation, a first difference between a refractive index of the inner core layer 110 and a refractive index of the outer core layer 130 is not greater than 0.002, a second difference between a refractive index of the inner sinking layer 120 and the refractive index of the outer core layer 130 is not greater than 0.003, and the refractive index of the inner sinking layer 120 is not greater than the refractive index of the outer core layer 130. In this way, the homogenization effect can be improved, allowing the light beam to be dispersed and transmitted between the inner core layer 110, the inner sinking layer 120, and the outer core layer 130.

Where, the first difference is equal to | *n*₁ - *n*₀ | and the second difference is equal to | *n*₂ *- n*₀ |.

Specifically, a value of *n*₁ - *n*₀ is -0.002 to 0.001, a value *of n*₂ - *n*₀ is -0.003 to 0.

Exemplarily, the first difference is 0 and the second difference is 0.001, or the first difference is 0.001 and the second difference is 0.002.

In order to facilitate processing and simplify processing difficulty, along the direction perpendicular to the extension direction of the energy transmitting fiber 500, the outer wall of the cross-section of the outer core layer 130 includes multiple straight edges connected sequentially head to tail, and at least two adjacent straight edges are connected by an arc segment.

In some embodiments, the cladding layer 200 includes a first cladding layer 210 and a second cladding layer 220 cladded on an outer wall of the first cladding layer 210, the first cladding layer 210 is cladded on the outer wall of the outer core layer 130, and a difference | *n*₄ *- n*₀ | between a refractive index of the first cladding layer 210 and the refractive index of the outer core layer 130 is 0.003 to 0.012, and the refractive index of the first cladding layer 210 is lower than the refractive index of the outer core layer 130. In this way, the difference between the refractive index of the first cladding layer 210 and the refractive index of the outer core layer 130 is small, which can effectively avoid the phenomenon of fiber burning caused by leakage during light beam output.

Exemplarily, the difference between the refractive index of the first cladding layer 210 and the refractive index of the outer core layer 130 is 0.01 or 0.006.

A difference | *n*₅ - *n*₀ | between a refractive index of the second cladding layer 220 and the refractive index of the outer core layer 130 is greater than 0.075, and the refractive index of the second cladding layer 220 is lower than the refractive index of the outer core layer 130.

The difference between the refractive index of the second cladding layer 220 and the refractive index of the outer core layer 130 can be 0.01 or 0.02.

In one possible implementation, the inner core layer 110 is a silicon dioxide layer, the outer core layer 130 is a silicon dioxide layer, and the inner sinking layer 120 is a fluorine-doped silicon dioxide layer.

In another possible implementation, the inner core layer 110 is a germanium-fluorine co-doped silicon dioxide layer, the outer core layer 130 is a silicon dioxide layer, and the inner sinking layer 120 is a silicon dioxide layer.

In some embodiments, the energy transmitting fiber also includes an outer coating layer 300, which is coated on the outer wall of the second cladding layer 220.

The outer coating layer 300 not only has the function of maintaining the strength of the energy transmitting fiber, preventing micro-bending loss of the energy transmitting fiber and preventing the energy transmitting fiber from moisture, but also reduces mechanical damage to the energy transmitting fiber.

Specifically, the first cladding layer 210 is a fluorine-doped silicon dioxide layer, the second cladding layer 220 is an acrylic resin layer, and the outer coating layer 300 is an acrylic resin layer.

It should be noted that a refractive index of an acrylic resin coating for the second cladding layer 220 is lower than a refractive index of an acrylic resin coating for the outer coating layer 300.

It can be understood that along the direction perpendicular to the extension direction of the energy transmitting fiber, the outer wall of the cross-section of the outer core layer 130 can be in a square ring or rectangular ring shape. For ease of description, the outer wall of the cross-section of the outer core layer 130 being in a square ring shape will be described in the following.

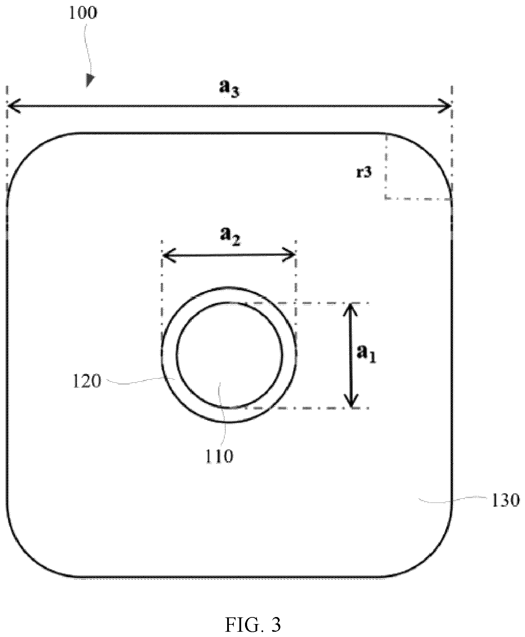

FIG. 3 is a structural schematic view of a core layer in an energy transmitting fiber provided by an embodiment of the present invention.

As shown in FIG. 3, in one possible implementation, a diameter a₁ of the inner core layer 110 is 6 µm to 50 µm.

A diameter a₂ of the inner sinking layer is 7 µm to 55 µm.

Along the direction perpendicular to the extension direction of the energy transmitting fiber 500, the outer wall of the cross-section of the outer core layer 130 is in a square ring shape, and a distance a₃ between opposite straight edges of the outer wall of the cross-section of the outer core layer 130 is 30 µm to 600 µm.

A diameter of the outer wall of the first cladding layer 210 is 90 µm to 1000 µm;

A diameter of the outer wall of the second cladding layer 220 is 170 µm to 1200 µm;

A diameter of the outer wall of the outer coating layer 300 is 250 µm to 1400 µm.

In one possible implementation, the arc segment is a circular-arc segment, a radius r₃ of the circular-arc segment is 5 µm to 15 µm, and a ratio of the distance a₃ between the opposite straight edges of the outer wall of the cross-section of the outer core layer 130 to the radius r₃ of the circular-arc segment is 5 to 15.

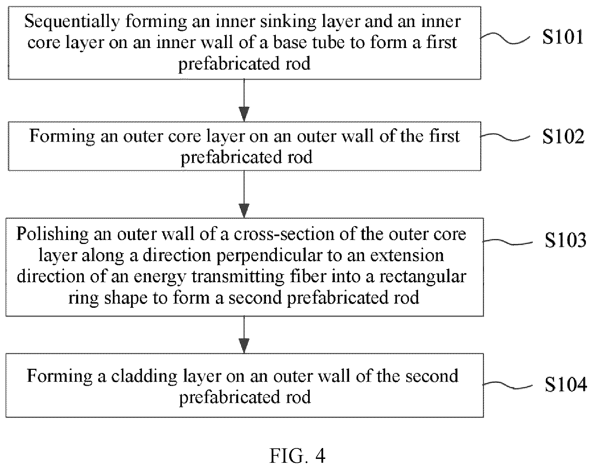

FIG. 4 is a flowchart of a preparation method of an energy transmitting fiber provided by an embodiment of the present invention.

The present invention also provides a preparation method for an energy transmitting fiber, to prepare the energy transmitting fiber provided in the above embodiments. The preparation method for the energy transmitting fiber includes steps below.

S101. Sequentially forming an inner sinking layer 120 and an inner core layer 110 on an inner wall of a base tube to form a first prefabricated rod, where the inner sinking layer 120 is cladded on an outer wall of the inner core layer 110.

Specifically, the inner sinking layer 120 and the inner core layer 110 can be prepared using a modified chemical vapor deposition (MCVD) method.

S102. Forming an outer core layer 130 on an outer wall of the first prefabricated rod.

Specifically, the outer core layer 130 can be prepared using an outside vapor deposition (OVD) or vapor axial deposition (VAD) method.

S103. Polishing the outer wall of the cross-section of the outer core layer 130 along a direction perpendicular to an extension direction of an energy transmitting fiber 500 into a rectangular ring shape to form a second prefabricated rod.

It can be understood that by polishing, the outer wall of the cross-section of the outer core layer 130 is formed into a rectangular ring shape, which is convenient for processing and has a high accuracy.

S104. Forming a cladding layer 200 on an outer wall of the second prefabricated rod.

Finally, the prefabricated rod is drawn to a wire with a required size and then a low refractive index acrylic resin coating and a high refractive index acrylic resin coating are applied thereto in sequence.

Where, the temperature of drawing is 1700 to 2200°C, the speed of drawing is 3 to 30 m/min, and the tension of drawing is 0.5 to 2 N.

In one possible implementation, forming the cladding layer 200 on the outer wall of the outer core layer 130 includes:
depositing the cladding layer 200 on the outer wall of the outer core layer 130 using a plasma outside deposition method.

Specifically, a fluorine-doped layer that meets a size requirement is prepared by a plasma outside deposition (POD) method to form the cladding layer 200.

In one possible implementation, forming the cladding layer 200 on the outer wall of the outer core layer 130 includes:
inserting a rectangular prefabricated rod where the cross-section of the outer core layer 130 is polished into a rectangle into a fluorine-doped bushing, and then melting and shrinking the prefabricated rod and the fluorine-doped bushing.

The cross-section of the fluorine-doped bushing along the direction perpendicular to the extension direction of the energy transmitting fiber 500 is polished into a circular ring shape.

Specifically, the fluorine-doped bushing is prepared using a PCVD process, depositing a fluorine-doped layer on an inner surface of a silicon dioxide-based tube.

It should be noted that after melting and shrinking, the silicon dioxide layer on the surface of the prefabricated rod needs to be polished clean.

For ease of understanding, a preparation process and performance parameters of an energy transmitting fiber with a square core will be described in detail below.

### Example 1

Step 1: a base tube was installed to a MCVD lathe, and SiCl₄ (tetrachlorosilane) and SF₆ (sulfur hexafluoride) were deposited inside the base tube to prepare an inner sinking layer 120. On the basis of depositing the inner sinking layer 120, SiCl₄, GeCl₄ (germanium tetrachloride) and SF₆ were further deposited to prepare an inner core layer 110, thereby forming a first prefabricated rod.

Where, a deposition speed of SiCl₄ is 0.8 g/min, and a flow rate of SF₆ is 50 sccm. The first prefabricated rod containing the inner core layer 110 and the inner sinking layer 120 was obtained by melting and shrinking the base tube.

Step 2: the first prefabricated rod was installed to a VAD lathe, SiCl₄ gas was introduced through a flame blowtorch, and a silicon dioxide loose body was deposited onto an outer wall of the first prefabricated rod, the loose body has a deposition thickness of 40 mm and a deposition speed of 10 g/min, and after the deposition of the loose body was completed, the first prefabricated rod attached with white loose body was placed into a sintering furnace for degassing and sintering, and finally extended on the lathe to a diameter of 15 mm, so as to form an outer core layer 130 on the outer wall of the first prefabricated rod.

Step 3: an outer wall of a cross-section of the outer core layer 130 along a direction perpendicular to an extension direction of an energy transmitting fiber 500 was polished to a square shape to form a second prefabricated rod.

Where, a distance between opposite straight edges of the outer wall of the cross-section of the outer core layer 130 is 9 mm, and a radius of a circular-arc segment is 0.9 mm.

Where, after polishing and shaping, the second prefabricated rod was subjected to acid washing, alkali washing and water washing treatments.

Step 4: a fluorine-doped SiO₂ (silicon dioxide) layer was deposited on an outer wall of the second prefabricated rod through POD. Where, a flow rate of SiCl₄ is 10 g/min, a flow rate of SF₆ is 50 mL/min. Then, the second prefabricated rod was sintered to form a solid third prefabricated rod, the final third prefabricated rod is rectangular in shape, with a distance of 26 mm between opposite straight edges of an outer wall of a cross-section of the third prefabricated rod. The third prefabricated rod was polished into circular in shape, with a diameter of 22.6 mm, to form a first cladding layer 210.

Step 5: the third prefabricated rod was connected to a tail handle and subjected to a wire drawing treatment.

Where, the first prefabricated rod was subjected to acid washing, alkali washing, and water washing treatments before the wire drawing treatment. When performing the wire drawing treatment, the wire drawing temperature was controlled to 1950°C, the wire drawing speed to 20 m/min, and the wire drawing tension to 1.2 N.

After the wire drawing treatment, a low refractive index acrylic resin coating and an outer coating layer 300 were sequentially applied, where a refractive index of the low refractive index acrylic resin coating is 1.37.

The indicators of the energy transmitting fiber prepared in the above example are shown in Table 1.

**Table 1: Indicators of energy transmitting fiber prepared in Example 1**

| | |
|---|---|
| Diameter a₁ of the inner core layer 110 | 20 µm |
| First difference | 0.0005 |
| Diameter a₂ of the outer wall of the inner sinking layer 120 | 22 µm |
| Second difference | 0.0007 |
| Distance a₃ between opposite straight edges of the outer wall of the cross-section of the outer core layer 130 | 50 µm |
| Radius r₃ of the circular-arc segment | 5 µm |
| Diameter of outer wall of the first cladding layer 210 | 125 |
| Difference in refractive index between the first cladding layer 210 and the outer core layer 130 | 0.01 |

### Example 2

Step 1: a base tube was installed to a MCVD lathe, and SiCl₄ and SF₆ were deposited inside the base tube to prepare an inner sinking layer 120. On the basis of depositing the inner sinking layer, SiCl₄, GeCl₄, and SF were further deposited to prepare an inner core layer 110, thereby forming a first prefabricated rod.

Where, a deposition speed of SiCl₄ is 1.5 g/min, and a flow rate of SF₆ is 20 sccm. The first prefabricated rod containing the inner core layer 110 and the inner sinking layer was obtained by melting and shrinking the base tube.

Step 2: the first prefabricated rod was installed to a VAD lathe, SiCl₄ gas was introduced through a flame blowtorch, and a silicon dioxide loose body was deposited onto a surface of the first prefabricated rod, a deposition thickness of the loose body was controlled to 45 mm, and a deposition speed thereof was controlled to 15 g/min, and after the deposition of the loose body was completed, the first prefabricated rod attached with white loose body was placed into a sintering furnace for degassing and sintering, and finally, the transparent prefabricated rod was extended on the lathe to a diameter of 12 mm, so as to form an outer core layer 130 on the outer wall of the first prefabricated rod.

Step 3: a cross-section of the outer core layer 130 was polished to a square shape to form a second prefabricated rod.

Where, a distance between opposite straight edges of the outer wall of the cross-section in square shape is 8 mm, and a radius of a circular-arc segment is 0.5 mm.

Where, after polishing and shaping, the second prefabricated rod was subjected to acid washing, alkali washing and water washing treatments.

Step 4: the second prefabricated rod and a prepared fluorine-doped bushing were subjected to melting and shrinking to form a third prefabricated rod.

Where, before melting and shrinking, the fluorine-doped bushing needs to be subj ected to acid washing, alkali washing and water washing treatments, respectively. The melting and shrinking has a flow rate of 100 slm, and a speed of 5 mm/min, and after melting and shrinking, the third prefabricated rod was polished to a circular shape with an outer diameter of 25.2 mm, to form a first cladding layer 210.

Step 5: the third prefabricated rod was connected to a tail handle to be subjected to a wire drawing treatment.

Where, the third prefabricated rod was subjected to acid washing, alkali washing and water washing treatments, respectively, before the wire drawing treatment.

Where, a wire drawing temperature is 2050°C, a wire drawing speed is 30 m/min, and a wire drawing tension is 1.5 N.

After the wire drawing treatment, a low refractive index acrylic resin coating and an outer coating layer 300 were sequentially applied, where a refractive index of the low refractive index acrylic resin coating is 1.37.

The indicators of the energy transmitting fiber prepared in the above example are shown in Table 2.

**Table 2: Indicators of energy transmitting fiber prepared in Example 2**

| | |
|---|---|
| Diameter a₁ of the inner core layer 110 | 25 µm |
| First difference | 0.001 |
| Diameter az of the inner sinking layer 120 | 27 µm |
| Second difference | 0.0015 |
| Distance a₃ between opposite straight edges of the outer wall of the cross-section of the outer core layer 130 | 100 µm |
| Radius r₃ of the circular-arc segment | 20 µm |
| Diameter of an outer wall of the first cladding layer 210 | 250 µm |
| Difference in refractive index between the first cladding layer 210 and the outer core layer 130 | 0.008 |

### Example 3

Step 1: a base tube was installed to a MCVD lathe, and SiCl₄ and SF₆ were deposited inside the base tube to prepare an inner sinking layer 120. On the basis of depositing the inner sinking layer 120, SiCl₄, GeCl₄, and SF₆ were further deposited to prepare an inner core layer 110, thereby forming a first prefabricated rod.

Where, a deposition speed of SiCl₄ is 2.5 g/min, and a flow rate of SF₆ is 100 sccm. The first prefabricated rod containing the inner core layer 110 and the inner sinking layer was obtained by melting and shrinking the base tube.

Step 2: the first prefabricated rod was installed to a VAD lathe, SiCl₄ gas was introduced through a flame blowtorch, and a silicon dioxide loose body was deposited onto the surface of the first prefabricated rod, a deposition thickness of the loose body is 55 mm, and a deposition speed thereof is 18 g/min, and after the deposition of the loose body was completed, the first prefabricated rod attached with white loose body was placed in a sintering furnace for degassing and sintering, and finally, the transparent prefabricated rod was extended on the lathe to a diameter of 18 mm, so as to form an outer core layer 130 on the outer wall of the first prefabricated rod.

Step 3: a cross-section of the outer core layer 130 was polished to a square shape to form a second prefabricated rod.

Where, a distance between opposite straight edges of the outer wall of the cross-section of the outer core layer 130 is 12 mm, and a radius of a circular-arc segment is 0.6 mm.

Where, after polishing and shaping, the second prefabricated rod was subjected to acid washing, alkali washing and water washing treatments.

Step 4: the second prefabricated rod and a prepared fluorine-doped bushing were subjected to melting and shrinking to form a third prefabricated rod.

Where, before melting and shrinking, the fluorine-doped bushing needs to be subj ected to acid washing, alkali washing and water washing treatments, respectively.

The melting and shrinking has a flow rate of 125 slm, and a speed of 18 mm/min, and after melting and shrinking, the third prefabricated rod was polished to a circular shape with an outer diameter of 18.2 mm, to form a first cladding layer 210.

Step 5: the third prefabricated rod was connected to a tail handle to be subjected to a wire drawing treatment.

Where, the third prefabricated rod was subjected to acid washing, alkali washing and water washing treatments, respectively, before the wire drawing treatment.

Where, a wire drawing temperature is 2020°C, a wire drawing speed is 25 m/min, and a wire drawing tension is 2 N.

After the wire drawing treatment, a low refractive index acrylic resin coating and an outer coating layer 300 were sequentially applied, where a refractive index of the low refractive index acrylic resin coating is 1.375.

The indicators of the energy transmitting fiber prepared in the above example are shown in Table 3.

**Table 3: Indicators of completed energy transmitting fiber prepared in Example 3**

| | |
|---|---|
| Diameter a₁ of the inner core layer 110 | 30 µm |
| First difference | 0.0008 |
| Diameter az of the inner sinking layer 120 | 33 µm |
| Second difference | 0.0012 |
| Distance a₃ between opposite straight edges of the outer wall of the cross-section of the outer core layer 130 | 250 µm |
| Radius r₃ of the circular-arc segment | 34.7 µm |
| Diameter of an outer wall of the first cladding layer 210 | 370 |
| Difference in refractive index between the first cladding layer 210 and the outer core layer 130 | 0.008 |

The present invention also provides a fiber laser, including a fiber laser body and the energy transmitting fiber 500 provided in the above embodiments and connected to the fiber laser body.

Where the structure and principle of the energy transmitting fiber 500 have been explained in detail in the above embodiments, and will not be repeated in the present embodiment.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent substitutions to some or all technical features therein, and these modifications or substitutions do not make the essence of the corresponding technical solutions depart from the scope of the technical solutions of embodiments of the present invention.

## Claims

1. An energy transmitting fiber, comprising a core layer and a cladding layer, wherein from a center of the energy transmitting fiber to an outer wall of the energy transmitting fiber, the core layer comprises an inner core layer, an inner sinking layer and an outer core layer that are sequentially cladded, and the cladding layer is cladded on an outer wall of the outer core layer;
along a direction perpendicular to an extension direction of the energy transmitting fiber, a cross-section of the inner core layer is in a circular shape, a cross-section of the inner sinking layer is in a circular ring shape, an inter wall of a cross-section of the outer core layer is in a circular ring shape, an outer wall of a cross-section of the outer core layer is in a rectangular ring shape, the inner core layer and the inner sinking layer are concentrically disposed, and the outer core layer is centrally symmetric along a center of the inner core layer; and
at least two of the inner core layer, the inner sinking layer and the outer core layer have different refractive indices.

2. The energy transmitting fiber according to claim 1, wherein a first difference between a refractive index of the inner core layer and a refractive index of the outer core layer is not greater than 0.002, a second difference between a refractive index of the inner sinking layer and the refractive index of the outer core layer is not greater than 0.003, and the refractive index of the inner sinking layer is not greater than the refractive index of the outer core layer.

3. The energy transmitting fiber according to claim 1, wherein along the direction perpendicular to the extension direction of the energy transmitting fiber, the outer wall of the cross-section of the outer core layer comprises multiple straight edges connected sequentially head to tail, and at least two adjacent straight edges are connected by an arc segment.

4. The energy transmitting fiber according to any one of claims 1-3, wherein the cladding layer comprises a first cladding layer and a second cladding layer cladded on an outer wall of the first cladding layer, the first cladding layer is cladded on the outer wall of the outer core layer, a difference between a refractive index of the first cladding layer and a refractive index of the outer core layer is 0.003 to 0.012, and the refractive index of the first cladding layer is smaller than the refractive index of the outer core layer; and
a difference between a refractive index of the second cladding layer and the refractive index of the outer core layer is greater than 0.075, and the refractive index of the second cladding layer is smaller than the refractive index of the outer core layer.

5. The energy transmitting fiber according to any one of claims 1-3, wherein the inner core layer is a silicon dioxide layer;
the outer core layer is a silicon dioxide layer; and
the inner sinking layer is a fluorine-doped silicon dioxide layer.

6. The energy transmitting fiber according to any one of claims 1-3, wherein the inner core layer is a germanium-fluorine co-doped silicon dioxide layer;
the outer core layer is a silicon dioxide layer; and
the inner sinking layer is a silicon dioxide layer.

7. The energy transmitting fiber according to claim 4, further comprising an outer coating layer, wherein the outer coating layer is coated on an outer wall of the second cladding layer;
the first cladding layer is a fluorine-doped silicon dioxide layer;
the second cladding layer is an acrylic resin layer; and
the outer coating layer is an acrylic resin layer.

8. The energy transmitting fiber according to claim 7, wherein a diameter of the inner core layer is 6 µm to 50 µm;
a diameter of an outer wall of the inner sinking layer is 7 µm to 55 µm;
along the direction perpendicular to the extension direction of the energy transmitting fiber, the outer wall of the cross-section of the outer core layer is in a square ring shape, and a distance between opposite straight edges of the outer wall of the cross-section of the outer core layer is 30 µm to 600 µm;
a diameter of the outer wall of the first cladding layer is 90 µm to 1000 µm;
a diameter of the outer wall of the second cladding layer is 170 µm to 1200 µm; and
a diameter of an outer wall of the outer coating layer is 250 µm to 1400 µm.

9. The energy transmitting fiber according to claim 3, wherein the arc segment is a circular-arc segment, a radius of the circular-arc segment is 5 µm to 15 µm, and a ratio of a distance between opposite straight edges of the outer wall of the cross-section of the outer core layer to the radius of the circular-arc segment is 5 to 15.

10. A preparation method for an energy transmitting fiber, the preparation method being used for preparing the energy transmitting fiber according to any one of claims 1-9, wherein the preparation method for an energy transmitting fiber comprises:
sequentially forming an inner sinking layer and an inner core layer on an inner wall of a base tube to form a first prefabricated rod, wherein the inner sinking layer is cladded on the outer wall of the inner core layer;
forming an outer core layer on an outer wall of the first prefabricated rod;
polishing an outer wall of a cross-section of the outer core layer along a direction perpendicular to an extension direction of the energy transmitting fiber into a rectangular ring shape to form a second prefabricated rod; and
forming a cladding layer on an outer wall of the second prefabricated rod.

11. The preparation method for an energy transmitting fiber according to claim 10, wherein the forming the cladding layer on the outer wall of the second prefabricated rod comprises:
depositing the cladding layer on the outer wall of the second prefabricated rod by a plasma outside deposition method.

12. The preparation method for an energy transmitting fiber according to claim 10, wherein the forming the cladding layer on the outer wall of the second prefabricated rod comprises:
inserting the second prefabricated rod into a fluorine-doped bushing, and melting and shrinking the second prefabricated rod and the fluorine-doped bushing; and
polishing the fluorine-doped bushing along the direction perpendicular to the extension direction of the energy transmitting fiber to a circular ring shape.

13. A fiber laser, comprising a fiber laser body and the energy transmitting fiber according to any one of claims 1-9 connected to the fiber laser body.
